# EUROPÄISCHE PATENTSCHRIFT

(11) **EP 2 008 856 B1**
(45) Veröffentlichungstag und Bekanntmachung des Hinweises auf die Patenterteilung: **01.02.2017**
(21) Anmeldenummer: 08008636.6
(22) Anmeldetag: 07.05.2008
(51) Int. Cl.: F01N 13/18

(54) **Elastische Aufhängung für eine Abgasanlage eines Kraftfahrzeugs**
Elastic mounting for an exhaust system in a motor vehicle
Suspension élastique pour une installation de gaz d'échappement d'un véhicule automobile

(30) Priorität: 28.06.2007 DE 202007009070 U
(43) Veröffentlichungstag der Anmeldung: 31.12.2008
(73) Patentinhaber: Anvis Deutschland GmbH, 36396 Steinau an der Strasse (DE)
(72) Erfinder: Heckmann, Gerhard, 36381 Schlüchtern (DE); Kolb, Ralf, 38381 Schlüchtern (DE); Stey, Manuell, 36093 Künzell (DE)
(74) Vertreter: Schmid, Nils T.F.

(56) Entgegenhaltungen:
- DE-C1- 4 243 147
- JP-A- 62 289 428
- US-A- 4 415 391
- US-A- 5 271 595
- US-A1- 2002 175 263

## Beschreibung

Die Erfindung betrifft eine elastische Aufhängung für eine Abgasanlage eines Kraftfahrzeugs.

Eine elastische Aufhängung besteht im wesentlichen aus einem Träger, der einen Haltebügel durch ein Dämpfungsteil elastisch trägt. Eine derartige elastische Aufhängung ist beispielsweise aus DE 100 23 781 bekannt, bei der in einer im Querschnitt L-förmigen Tragplatte zwei Durchgänge ausgebildet sind. In den Durchgängen ist jeweils ein glockenförmiges Dämpfungsteil eingeknüpft. Der Haltebügel hat eine Widerhakenstruktur, die am konisch zulaufenden Ende des glockenförmigen Dämpfungsteils in einem Loch eingeknüpft ist. Für das Dämpfungsteil wird ein Ethylen-Propylen-Dien-Kautschuk vorgeschlagen, wobei die Tragplatte aus Stahlblech geformt ist. Die Tragplatte ist mit einer Korrosionsschutzschicht überzogen.

Weitere elastische Aufhängungen für Abgasanlagen sind aus DE 4243147 C1, JP 62-289428, US 2002/0175263 A1, US 4,415,391 und US 5,271,595 bekannt.

Den Stand der Technik nach dem Oberbegriff des Anspruchs 1 oder 2 stellt hier die JP62289428 dar.

Es ist Aufgabe der Erfindung, eine elastische Aufhängung zu schaffen, die die Nachteile des Stands der Technik überwindet, insbesondere bei Aufrechterhaltung einer ausreichenden elastischen Dämpfungseigenschaft und langer Lebensdauer wesentlich kostengünstiger und leichter als die bekannte Aufhängung ist, wobei außerdem der Korrosionsschutz verbessert ist.

Diese Aufgabe wird durch die Merkmale von Anspruch 1 oder 2 gelöst. Danach ist die Tragplatte der elastischen Aufhängung mit zwei Montagestellen versehen, an welchen die Aufhängung an der Kraftfahrzeugkarosserie befestigbar ist. Das Halteteil, das zum Halten der Abgasanlage aufgelegt ist, wird über einen Elastomerkörper an die Tragplatte gekoppelt. Die Tragplatte ist aus einem Kunststoffmaterial gefertigt.

Trotz der üblicherweise bei Abgasanlagen auftretenden hohen Betriebstemperaturen hat der Erfinder herausgefunden, daß für die Tragplatte auch ein Kunststoffmaterial für den Hauptträger verwendet werden kann, das außerdem eine stabile und dauerhafte elastische Aufhängung für die Abgasanlage bereitstellt. Bei aufwendigen Untersuchungen von Abgasanlageaufhängungen mit Kunststofftragplatte als Hauptträger sowohl im Fahrzeugdauerlauf auf langen Strecken als auch bei intensiver Fahrzeugbelastung auf unausgebauten Fahrstrecken wurde herausgefunden, daß durch eine elastische Aufhängung mit einer Kunststofftragplatte trotz der hohen Umgebungstemperaturen sehr gute Dauerbeständigskeitswerte erzielt werden können. Dabei mußten keine Einbußen hinsichtlich der elastischen, dämpfenden Eigenschaften der Aufhängung hingenommen werden. Selbst bei extremsten Prüflastbedingungen, bei denen die elastische Aufhängung einer maximalen Temperatur während langandauernder Motorvolllast und häufigen Lastwechseln großer Amplitude ausgesetzt wurden, wurden keine nennenswerten Verschleißschäden entdeckt, die zum Versagen der elastischen Aufhängung führen konnten.

Neben der Aufrechterhaltung der Dauerbeständigkeit und Dämpfungsfunktion stellt die Erfindung eine deutliche Reduzierung des Gewichts der elastischen Aufhängung von über 40% gegenüber der Ausführung mit Metallträger bereit. Auch aufgrund der durch die ausschließliche Verwendung von Kunststoff erzielten Korrosionsbeständigkeit konnten die Herstellungskosten deutlich reduziert werden, weil zusätzlich Korrosionsschutzaußenschichten entbehrlich sind.

Bei einer bevorzugten Ausführung der Erfindung ist die Tragplatte aus einem Polyamid, wie das sogenannte PA 6, PA 46, PA 66 + 6, gefertigt, insbesondere spritzgegossen. Vorzugsweise besteht die Tragplatte aus einer Polyamidmatrix mit Glasfasern. Besonders gute Prüfergebnisse wurden erzielt, als für die Tragplatte ein sogenanntes Polyamid 66 GF 35 mit einem Anteil von 35% Glasfasern verwendet wird.

Für den Elastomerkörper zeigten sich als besonders gut geeignet ein Silikon-Kautschuk-Gemisch, insbesondere VMQ oder ein EPDM-Gummi, insbesondere EPDM-Peroxid.

Aufgrund der unterschiedlichen Belastungsverhältnisse bei Diesel und Benzinmotoren stellte sich der Silikon-Kautschuk als besonders geeignet bei Benzinmotoren heraus. Im Gegensatz dazu wurden optimale Dämpfungsfunktionen bei Dieselmotoren bei der Verwendung von einem EPDM-Gummi erzielt.

Bei einer bevorzugten Ausführung der Erfindung ist die Tragplatte länglich, und die Montagestellen sind im Bereich der Enden in der Tragplatte vorgesehen. Die wenigstens zwei Montagestellen sind durch Löcher in der Tragplatte gebildet, in die jeweils eine Verstärkungshülse insbesondere aus Aluminium oder Stahl, nachträglich montiert, insbesondere eingesetzt, ist. Beispielsweise kann die Verstärkungshülse auch mit dem die Tragplatte bildenden Material umspritzt sein.

Vorzugsweise weist die Tragplatte wenigstens einen Durchgang oder vorzugsweise zwei Durchgänge auf, in denen ein jeweiliger Elastomerkörper einvulkanisiert ist. Bei einer bevorzugten Ausführung der Erfindung sind die zwei Durchgänge in einem gleichen Abstand zu einer Symmetrieachse der Tragplatte, nämlich jenseits und diesseits davon, angeordnet. Zu diesen Symmetrieachsen können allerdings die Montagestellen unterschiedlich weit entfernt angeordnet sein. Bei einer besonderen Ausführung der Erfindung hat die Tragplatte einen verstärkten Umfangsrand.

Erfindungsgemäß sind Lochränder an den wenigstens zwei Montagestellen gegenüber dem Tragplattenkörper verstärkt. An dem jeweiligen verstärkten Lochrand schließen Verstärkungsrippen an, die sich hin zum Tragplattenumfangsrand erstrecken.

Bei einer alternativen Ausführung der Erfindung hat die Tragplatte mittig wenigstens zwei insbesondere zueinander kreuzweise verlaufende Verstärkungsrippen, die sich zwischen den wenigstens zwei Elastomerkörpern erstrecken und vorzugsweise quer zu einer Längsrichtung der Tragplatte verlaufen.

Die Erfindung betrifft eine elastische Aufhängung, wie sie insbesondere oben ausgeführt ist, für eine Abgasanlage eines Kraftfahrzeugs. Diese elastische Aufhängung soll ausschließlich aus einer Kunststofftragplatte mit zwei Montagestellen, an welchen die Aufhängung an der Kraftfahrzeugkarosserie befestigbar ist, zwei an den Montagestellen in die Tragplatte eingesetzte Verstärkungshülsen insbesondere aus Aluminium, einem Halteteil, das zum Halten der Abgasanlage ausgelegt ist, und wenigstens einem das Halteteil und der Tragplatte koppelnden Elastomerkörper bestehen.

Weitere Vorteile, Eigenschaften und Merkmale der Erfindung werden durch die folgende Beschreibung einer bevorzugten Ausführung der Erfindung anhand der beiliegenden Zeichnungen deutlich, in denen zeigen:
- Figur 1: eine Draufsicht einer ersten Ausführung der erfindungsgemäßen elastischen Aufhängung, wobei ein Halteteil zum Anbinden einer KraftfahrzeugAbgasanlage nicht dargestellt ist;
- Figur 2: eine perspektivische Ansicht der elastischen Aufhängung mit einem Halteteil;
- Figur 3: eine Querschnittsansicht der Anordnung aus Elastomerkörper der elastischen Aufhängung gemäß Figur 2 und Halteteil; und
- Figur 4: eine perspektivische Ansicht einer zweiten Ausführung der erfindungsgemäßen elastischen Aufhängung, an die über ein zweibügelteiliges Halteteil eine dargestellte Abgasanlage angebracht ist.

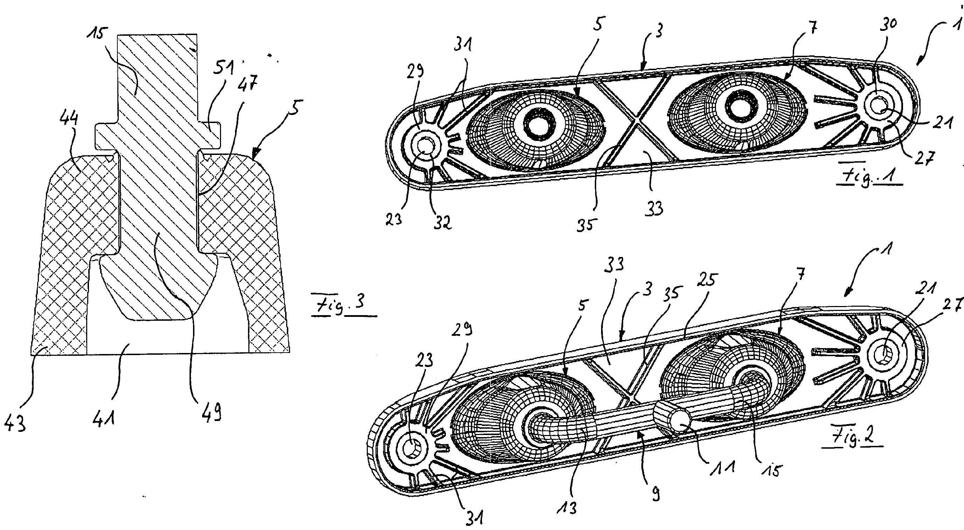

In den Figuren 1 und 2 ist die erfindungsgemäße elastische Aufhängung im allgemeinen mit der Bezugsziffer 1 versehen. Die elastische Aufhängung 1 umfaßt als Hauptbestandteil eine Tragplatte 3 mit einer Längserstreckung, zwei Elastomerkörper 5, 7 und ein gabelartiges einteiliges Halteteil 9 (nur in Figur 2) zum direkten Halten einer nicht dargestellten Abgasanlage eines Kraftfahrzeugs. Das Halteteil 9 hat einem Mittelschaft 11 und zwei Gabelzinken 13, 15.

Die Tragplatte 3 weist eine wesentliche größere Längserstreckung als Breitenerstreckung auf. Die längliche Tragplatte 3 hat an ihren Endbereichen 17, 19 zwei Montagelöcher 21, 23. Die Montagelöcher 21, 23 dienen zur Anflanschung der elastischen Aufhängung 1 an eine nicht näher dargestellte Fahrzeugkarosserie.

Wie in Figur 1 ersichtlich ist, hat die Tragplatte 3 vorzugsweise einen vollständig umlaufenden Verstärkungsrand 25. Außerdem sind die Montagelöcher 21, 23 mit einem umlaufenden ringförmigen Verstärkungsrand 27, 29 versehen, von dem sich sternförmig Verstärkungsstreben 31 erstrecken. Im Mittelbereich 33 zwischen den Elastomerkörpern 5, 7 ist eine kreuzförmige Verstärkungsrippe 35 ausgebildet, wobei der Kreuzungspunkt der kreuzförmigen Rippe 35 auf einer Achsensymmetrieachse der Tragplatte 3 liegt, in der die Elastomerkörper 5, 7 liegen. Die Montagelöcher 21, 23 hingegen liegen in unterschiedlichen Abständen zu der Symmetrieachse, die von einer Mittelachse des Mittelschafts 11 des Halteteils 9 geschnitten wird. In die Montagelöcher 21, 19 sind ringförmige Aluminiumhülsen 30, 32 angeordnet.

Die Tragplatte 3 ist aus einem Polyamid gespritzt.

In Figur 3 ist eine Querschnittsansicht des Elastomerkörpers 5, der Zinke 15 des gabelartigen Haltebügels 9 sowie eines Durchgangsabschnitts 41 der Tragplatte 3 gezeigt. Am Durchgangsabschnitt 41 des Elastomerkörpers 5 ist die Zinke 15 eingeknüpft.

Der Elastomerkörper 5 hat eine im wesentlichen glockenförmige Form, wobei das erweiterte Ende 43 in einen Durchgang der Tragplatte 3 eingespritzt ist, während am konisch zulaufenden Ende 44 des Elastomerkörpers 5 ein Einknüpfloch 47 ausgebildet ist, in die ein Zinkenende 49 einknüpfend eingesetzt ist, das ein pfeilförmige, gerundete Verdickung bildet. Die pfeilförmige Verdickung sowie ein davon in einem Abstand ausgebildeter Absatz 51 begrenzen einen Einschnürungsbereich, der axial geringfügig größer als die axiale Stärke des Elastomerkörpers 5 im Bereich des Einknüpflochs 47 ist. Im eingeknüpften Zustand liegt der das Einknüpfloch 47 definierende Abschnitt des Elastomerkörpers 5 in dem Einschürungsbereich 53. Der Einschnürungsbereich 53 hat einen Durchmesser, der etwas größer als der Innendurchmesser des Einknüpflochs 47 ist, so daß das Zinkenende 49 von dem Elastomerkörper 5 elastisch umgriffen wird.

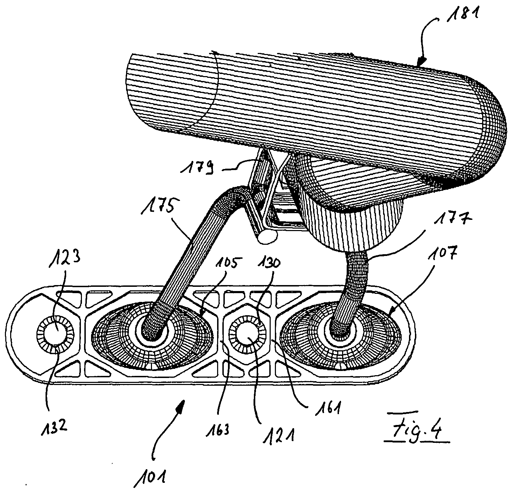

In Figur 4 ist eine weitere Ausführung einer erfindungsgemäßen elastischen Aufhängung dargestellt, wobei für identische und ähnliche Bauteile identische Bezugsziffern verwendet werden, die um 100 erhöht sind. Die elastische Aufhängung 101 unterscheidet sich von der elastischen Aufhängung 1 gemäß den Figuren 1 und 2 dahingehend, daß das Montageloch 121 zwischen den Elastomerkörpern 105, 107 auf deren Symmetrieachse angeordnet ist.

Das Montageloch 121 ist von zwei Querstreben 161, 163 umgeben, welche mit weiteren Strebenarmen eine regelmäßige Sechseckform ergeben. Diese durch Streben gebildete Fachwerksverstärkungstruktur ist zwischen dem Montageloch 123 und dem Elastomerkörper 107 angeordnet.

Des weiteren unterscheidet sich die elastische Aufhängung 101 von der in den Figuren 1 und 2 darin, daß Aluminiumhülsen 130, 132 von dem Kunststoffmaterial der Tragplatte 103 umspritzt ist.

Das Halteteil 109 ist im Gegensatz zu der Ausführung in den Figuren 1 und 2 zweiteilig mit zwei separaten Haltearmen 175, 177 ausgebildet, die miteinander über einen Befestigungsflansch 179 verbunden ist, der die Abgasanlage 181 mit den Haltearmen 175, 177 verbindet.

Wie in Figur ersichtlich ist, verläuft die Abgasanlage 181 im wesentlichen in einer Ebene, die senkrecht zur Tragplatte 103 ist. Auch die Haltearme175, 177 erstrecken sich hauptsächlich in der selben Richtung wie die Abgasanlage 181. In Betrieb des Kraftfahrzeugs insbesondere bei besonders starken Bremsbelastungen, übt die Abgasanlage 181 aufgrund deren Trägheit in Fahrtrichtung wirkende Druckkräfte auf die Tragarme 175, 177, die die Belastung an die Elastomerkörper 107, 105 weiterleiten. Um eine besonders gute Krafteinleitung bei diesen Bremsvorgängen zu erzielen, ist die Tragplatte an ein nicht näher dargestelltes Karosserieteil derart angeordnet, daß sowohl die Längserstreckung als auch die Breitenerstreckung der Tragplatte senkrecht zur Fahrtrichtung bzw. Lastrichtung angeordnet ist.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1, 101: elastische Aufhängung
- 3, 103: Tragplatte
- 5, 7, 105, 107: Elastomerkörper
- 9: Haltebügel
- 11: Mittelschaft
- 13, 15: Gabelzinken
- 17, 19: Endbereich
- 21, 23, 121, 123: Montagelöcher
- 25: umlaufender Verstärkungsrand
- 27, 29: ringförmiger Verstärkungsrand
- 30, 32: Aluminiumhülsen
- 31: Verstärkungsstreben
- 33: Mittelbereich
- 35: kreuzförmige Verstärkungsrippe
- 41: Durchgangsabschnitt
- 43: erweitertes Ende
- 44: konisch zulaufendes Ende
- 47: Einknüpfloch
- 49: Zinkenende
- 53: Einschnürungsbereich
- 161, 163: Querstreben
- 171, 173: Aluminiumhülsen
- 175, 177: Haltearme
- 181: Abgasanlage

## Patentansprüche

1. Elastische Aufhängung für eine Abgasanlage eines Kraftfahrzeugs, umfassend eine Tragplatte (3) mit zwei Montagestellen, an welchen die elastische Aufhängung (1) an der Kraftfahrzeugkarosserie direkt ortsfest anbringbar ist, ein Halteteil (9), das zum Halten der Abgasanlage ausgelegt ist, und wenigstens einen das Halteteil (9) und die Tragplatte (3) elastisch koppelnden Elastomerkörper (5, 7), wobei die Tragplatte (3) aus einem Kunststoffmaterial gefertigt ist, **dadurch gekennzeichnet, dass** Lochränder an den wenigstens zwei Montagestellen gegenüber dem Tragplattenkörper verstärkt sind und an dem jeweiligen verstärkten Lochrand Verstärkungsrippen anschließen, die sich hin zum Umfangsrand der Tragplatte (3) erstrecken.

2. Elastische Aufhängung für eine Abgasanlage eines Kraftfahrzeugs, umfassend eine Tragplatte (3, 103) mit zwei Montagestellen, an welchen die elastische Aufhängung (1) an der Kraftfahrzeugkarosserie direkt ortsfest anbringbar ist, ein Halteteil (9), das zum Halten der Abgasanlage ausgelegt ist, und wenigstens einen das Halteteil (9) und die Tragplatte (3, 103) elastisch koppelnden Elastomerkörper (5, 7), wobei die Tragplatte (3, 103) aus einem Kunststoffmaterial gefertigt ist, **dadurch gekennzeichnet, dass** die Tragplatte (3, 103) mittig wenigstens zwei Verstärkungsrippen und/oder wenigstens zwei Querstreben (161, 163) aufweist, die sich zwischen den wenigstens zwei Elastomerkörpern erstrecken.

3. Elastische Aufhängung nach Anspruch 1 oder 2, bei der die Tragplatte (3) aus einem Polyamid oder einem Duroplast gefertigt, insbesondere spritzgegossen, ist.

4. Elastische Aufhängung nach einem der Ansprüche 1 bis 3, bei der die Tragplatte (3) aus einer Polyamidmatrix mit Glasfasern besteht, wobei insbesondere ein Polyamid, insbesondere ein Polyamid 66, mit etwa 35 % Glasfasern verwendet ist.

5. Elastische Aufhängung nach einem der Ansprüche 1 bis 4, bei der der Elastomerkörper (5, 7) aus einem Silikon-Kautschuk, insbesondere VMQ, besteht, wobei insbesondere für eine Abgasanlage eines Benzinmotors der Silikon-Kautschuk für den Elastomerkörper verwendet ist, und/oder vorzugsweise der Elastomerkörper (5, 7) aus einem EPDM-Gummi, insbesondere einem EPDM Peroxid, besteht, wobei insbesondere für eine Abgasanlage eines Dieselmotors der EPDM-Gummi für den Elastomerkörper verwendet ist.

6. Elastische Aufhängung nach einem der Ansprüche 1 bis 5 , bei der die Tragplatte (3) länglich ist und die Montagestellen im Bereich der Enden der Tragplatte (3) vorgesehen sind.

7. Elastische Aufhängung nach einem der Ansprüche 1 bis 6, bei der die wenigstens zwei Montagestellen durch Löcher in der Tragplatte (3) gebildet sind, in die jeweils eine Verstärkungshülse insbesondere aus Aluminium oder Stahl eingesetzt ist.

8. Elastische Aufhängung nach einem der Ansprüche 1 bis 7, bei der die Tragplatte (3) wenigstens einen Durchgang, vorzugsweise zwei Durchgänge, aufweist, in dem der wenigstens eine Elastomerkörper (5, 7) eingespritzt ist, wobei insbesondere die zwei Durchgänge in einem gleichen Abstand zu einer Symmetrieachse der Tragplatte (3) angeordnet sind.

9. Elastische Aufhängung nach einem der Ansprüche 1 bis 8, bei der die Tragplatte (3) einen verstärkten Umfangsrand aufweist.

10. Elastische Aufhängung nach einem der Ansprüche 1 bis 9, bei der die Tragplatte (3) mittig wenigstens zwei zueinander kreuzweise verlaufende Verstärkungsrippen aufweist, die sich zwischen den wenigstens zwei Elastomerkörpern (5, 7) erstrecken und quer zu einer Längsrichtung der Tragplatte verlaufen.

11. Elastische Aufhängung nach einem der Ansprüche 1 bis 10, bei der die Tragplatte (103) wenigstens zwei Querstreben (161, 163) aufweist, die sich zwischen den wenigstens zwei Elastomerkörpern erstrecken, wobei die Querstreben (161, 163) Teil einer sechseckigen Strebenanordnung sind.

12. Elastische Aufhängung nach Anspruch 11, bei der die Tragplatte eine weitere Querstrebe zwischen einem Montageloch (121, 123) und einem Elastomerkörper (105, 107) aufweist.

13. Elastische Aufhängung nach einem der Ansprüche 1 bis 12, bei der eines der Montagelöcher (121) zwischen den Elastomerkörpern (105, 107) in die Tragplatte (103) eingearbeitet ist.

## Claims

1. An elastic suspension for an exhaust system of a motor vehicle, encompassing a carrier plate (3) with two assembly locations, where the elastic suspension (1) can be fastened directly and fixedly to the motor vehicle body, a retaining part (9) designed to hold the exhaust system, and at least one elastomer body (5, 7) that elastically couples the retaining part (9) and carrier plate (3), **characterized in that** the carrier plate (3) is made out of a plastic material, wherein hole edges are reinforced on the at least two assembly locations relative to the carrier plate body, and reinforcing ribs extending toward the peripheral edge of the carrier plate (3) adjoin the respective reinforced hole edge.

2. The elastic suspension for an exhaust system of a motor vehicle, encompassing a carrier plate (3, 103) with two assembly locations, where the elastic suspension (1) can be fastened directly and fixedly to the motor vehicle body, a retaining part (9) designed to hold the exhaust system, and at least one elastomer body (5, 7) that elastically couples the retaining part (9) and carrier plate (3, 103), **characterized in that** the carrier plate (3, 103) is made out of a plastic material, wherein the carrier plate (3, 103) centrally exhibits at least two reinforcing ribs and/or at least two cross braces (161, 163), which extend between the at least two elastomer bodies.

3. The elastic suspension according to claim 1 or 2, in which the carrier plate (3) is fabricated, in particular injection molded, out of a polyamide or thermoset.

4. The elastic suspension according to one of claims 1 to 3, in which the carrier plate (3) consists of a polyamide matrix with glass fibers, wherein in particular a polyamide, in particular a polyamide 66, with roughly 35 % glass fibers is used.

5. The elastic suspension according to one of claims 1 to 4, in which the elastomer body (5, 7) consists of a silicone rubber, in particular VMQ, wherein the silicone rubber is used for the elastomer body in particular for an exhaust gas of a gasoline engine, and/or preferably the elastomer body (5, 7) consists of an EPDM rubber, in particular an EPDM peroxide, wherein the EPDM rubber is used for the elastomer body in particular for an exhaust system of a diesel engine.

6. The elastic suspension according to one of claims 1 to 5, in which the carrier plate (3) is oblong, and the assembly locations are provided in the area of the ends of the carrier plate (3).

7. The elastic suspension according to one of claims 1 to 6, in which the at least two assembly locations consist of holes in the carrier plate (3), into which is inserted a respective reinforcing sleeve, in particular made out of aluminum or steel.

8. The elastic suspension according to one of claims 1 to 7, in which the carrier plate (3) exhibits at least one passage, preferably two passages, in which the at least one elastomer body (5, 7) is injected, wherein in particular the two passages are arranged at the same distance from a symmetrical axis of the carrier plate (3).

9. The elastic suspension according to one of claims 1 to 8, in which the carrier plate (3) exhibits a reinforced peripheral edge.

10. The elastic suspension according to one of claims 1 to 9, in which the carrier plate (3) centrally exhibits at least two reinforcing ribs running crossed relative to each other, which extend between the at least two elastomer bodies (5, 7) and run transverse to a longitudinal direction of the carrier plate.

11. The elastic suspension according to one of claims 1 to 10 for an exhaust system of a motor vehicle, whose suspension (1) consists of a plastic carrier plate (3) with two assembly positions at which the suspension can be directly and fixedly fastened to the motor vehicle body, two reinforcing sleeves made in particular out of aluminum inserted into the carrier plate (3) at the assembly locations, a retaining part (9) designed for holding the exhaust system, and at least one elastomer body (5, 7) that couples the retaining part (9) and carrier plate (3).

12. The elastic suspension according to one of claims 1 to 11, in which the carrier plate (103) exhibits at least two cross braces (161, 163), which extend between the at least two elastomer bodies, wherein the cross braces (161, 163) are part of a hexagonal brace arrangement.

13. The elastic suspension according to claim 12, in which the carrier plate exhibits an additional cross brace between an assembly hole (121, 123) and an elastomer body (105, 107).

## Revendications

1. Suspension élastique pour un système d'échappement d'un véhicule automobile, comprenant une plaque de support (3) avec deux emplacements de montage, sur lesquels la suspension élastique (1) peut être directement montée de manière fixe sur la carrosserie du véhicule automobile, une pièce de fixation (9) qui est conçue pour fixer le système d'échappement et au moins un corps en élastomère (5, 7) accouplant de manière élastique la pièce de fixation (9) et la plaque de support (3), **caractérisée en ce que** la plaque de support (3) est fabriquée dans une matière plastique, les bords perforés étant renforcés sur au moins deux emplacements de montage par rapport au corps de la plaque de support et des nervures de renfort se raccordant au bord perforé respectivement renforcé, qui s'étendent jusqu'au bord périphérique de la plaque de support (3).

2. Suspension élastique pour un système d'échappement d'un véhicule automobile, comprenant une plaque de support (3, 103) avec deux emplacements de montage, sur lesquels la suspension élastique (1) peut être directement montée de manière fixe sur la carrosserie du véhicule automobile, une pièce de fixation (9) qui est conçue pour fixer le système d'échappement et au moins un corps en élastomère (5, 7) accouplant de manière élastique la pièce de fixation (9) et la plaque de support (3, 103), **caractérisée en ce que** la plaque de support (3, 103) est fabriquée dans une matière plastique,, la plaque de support (3, 103) comportant au centre au moins deux nervures de renfort et/ou au moins deux renforts transversaux (161, 163), qui s'étendent entre au moins deux corps en élastomère.

3. Suspension élastique selon la revendication 1 ou 2 pour laquelle la plaque de support (3) est fabriquée dans un polyamide ou un plastique thermodurcissable, notamment moulée par injection.

4. Suspension élastique selon l'une quelconque des revendications 1 à 3 pour laquelle la plaque de support (3) est composée d'une matrice en polyamide avec des fibres de verre, un polyamide, en particulier un polyamide 66, étant utilisé avec environ 35 % de fibres de verre.

5. Suspension élastique selon l'une quelconque des revendications 1 à 4 pour laquelle le corps en élastomère (5, 7) est composé d'un caoutchouc de silicone, notamment VMQ, le caoutchouc de silicone pour le corps en élastomère étant en particulier utilisé pour un système d'échappement d'un moteur à essence et/ou le corps en élastomère (5, 7) étant de préférence composé d'un caoutchouc EPDM, notamment d'un peroxyde EPDM, le caoutchouc EPDM étant utilisé en particulier pour un système d'échappement d'un moteur Diesel.

6. Suspension élastique selon l'une quelconque des revendications 1 à 5 pour laquelle la plaque de support (3) est longitudinale et les emplacements de montage sont prévus dans la zone des extrémités de la plaque de support (3).

7. Suspension élastique selon l'une quelconque des revendications 1 à 6 pour laquelle au moins les deux emplacements de montage sont formés par des trous dans la plaque de support (3) dans lesquels est inséré respectivement un manchon de renfort notamment en aluminium ou en acier.

8. Suspension élastique selon l'une quelconque des revendications 1 à 7 pour laquelle la plaque de support (3) comporte au moins un passage, de préférence deux passages, dans lequel au moins un corps en élastomère (5, 7) est moulé par injection, les deux passages étant disposés à une même distance par rapport à l'axe de symétrie de la plaque de support (3).

9. Suspension élastique selon l'une quelconque des revendications 1 à 8 pour laquelle la plaque de support (3) comporte un bord périphérique renforcé.

10. Suspension élastique selon l'une quelconque des revendications 1 à 9 pour laquelle la plaque de support (3) comporte au centre au moins deux nervures de renfort passant de manière croisée l'une par rapport à l'autre, qui s'étendent entre au moins deux corps en élastomère (5, 7) et passent transversalement à une direction longitudinale de la plaque de support.

11. Suspension élastique selon l'une quelconque des revendications 1 à 10 pour un système d'échappement d'un véhicule automobile, laquelle suspension (1) est composée d'une plaque de support en matière plastique (3) avec deux emplacements de montage, sur lesquels la suspension peut être montée de manière fixe directement sur la carrosserie de véhicule automobile, de deux manchons de renfort en particulier en aluminium insérés dans la plaque de support (3) aux emplacements de montage , d'une pièce de fixation (9) qui est conçue pour fixer le système d'échappement et au moins d'un corps en élastomère (5, 7) accouplant la pièce de fixation (9) et la plaque de support (3).

12. Suspension élastique selon l'une quelconque des revendications 1 à 11 pour laquelle la plaque de support (103) comporte au moins deux renforts transversaux (161, 163) qui s'étendent entre au moins les deux corps en élastomère, les renforts transversaux (161, 163) faisant partie d'un agencement hexagonal de renforts.

13. Suspension élastique selon la revendication 12 pour laquelle la plaque de support comporte un autre renfort transversal entre un trou de montage (121, 123) et un corps en élastomère (105, 107).
